# EUROPÄISCHE PATENTSCHRIFT

(11) **EP 3 107 955 B1**
(45) Veröffentlichungstag und Bekanntmachung des Hinweises auf die Patenterteilung: **19.06.2019**
(21) Anmeldenummer: 15706009.6
(22) Anmeldetag: 20.02.2015
(51) Int. Cl.: C08J 5/10, C08L 77/00, C08J 5/04, C08L 77/06

(54) **THERMOPLASTISCHE ZUSAMMENSETZUNGEN**
THERMOPLASTIC COMPOSITIONS
COMPOSITIONS THERMOPLASTIQUES

(30) Priorität: 21.02.2014 EP 14156190
(43) Veröffentlichungstag der Anmeldung: 28.12.2016
(73) Patentinhaber: Lanxess Deutschland GmbH, 50569 Köln (DE)
(72) Erfinder: BENIGHAUS, Tobias, 48145 Münster (DE); JOACHIMI, Detlev, 47800 Krefeld (DE); MARGRAF, Günter, 41539 Dormagen (DE)
(86) Internationale Anmeldenummer: PCT/EP2015/053635
(87) Internationale Veröffentlichungsnummer: WO 2015/124734

(56) Entgegenhaltungen:
- EP-A1- 2 573 138
- EP-A1- 2 881 438
- DE-A1-102008 052 055
- US-A- 5 204 396
- US-A1- 2005 250 885
- US-A1- 2009 069 478
- US-A1- 2014 051 795

## Beschreibung

Die vorliegende Erfindung betrifft ein Verfahren zur Verhinderung oder zu Reduktion von Emissionen während der Verarbeitung Langfaser-verstärkter PA6- oder PA66 basierter oder auf Copolyamiden von PA6 oder PA66 basierenden Formmassen.

### Stand der Technik

Die Verstärkung von Erzeugnissen auf Basis thermoplastischer Formmassen ist seit vielen Jahren Stand der Technik. Üblicherweise werden bei der Herstellung von Thermoplast-Zusammensetzungen Schnittglasfasern zur Thermoplastschmelze gegeben, um die mechanischen Eigenschaften von daraus herzustellenden Erzeugnissen zu verbessern. Der Einsatz von Schnittglasfasern in Polyamid-Formmassen führt dann zu deutlich erhöhten Steifigkeiten und Festigkeiten der Erzeugnisse im Vergleich zu Erzeugnissen ohne Schnittglasfasern. Üblicherweise werden Schnittglasfasern mit Längen im Bereich von 2 bis 8 mm eingesetzt. Durch die bei einem Mischvorgang auftretende Scherung werden allerdings die Schnittglasfasern zu deutlich kürzeren Einheiten zerbrochen. Als Folge dessen liegt der Mittelwert der Faserlängenverteilung der Schnittglasfasern nach einer Mischung der Komponenten zumeist im Bereich von 100 bis 500 µm [Technische Thermoplaste 4. Polyamide, Hrsg.: G. W. Becker und D. Braun, Carl Hanser Verlag, 1998, S. 102 - 107].

Aufgrund dieser Verkürzung der mittleren Faserlängen in einem Mischprozess können Zusammensetzungen aus Polyamid und Schnittglasfasern die Anforderungen nach höheren Festigkeiten und Steifigkeiten von daraus herzustellenden Erzeugnissen teilweise nicht erfüllen.

Durch Langfaserverstärkungen hingegen können bei daraus herzustellenden Erzeugnissen deutlich bessere mechanische Eigenschaften erzielt werden. Daher wurden unterschiedliche Verfahren entwickelt, um Langfaserverstärkungen beispielsweise mit einer thermoplastischen Polyamid-Matrix zu imprägnieren und in die Form eines Erzeugnisses zu bringen. Bei vielen dieser Prozesse wird in einem Zwischenschritt ein Halbzeug gefertigt, welches anschließend in einem oder mehreren weiteren Verarbeitungsschritten zu einem Enderzeugnis geformt wird. [K. Brast, Dissertation "Verarbeitung von Langfaserverstärkten Thermoplasten im direkten Plastifizier-/Pressverfahren", Rheinisch-Westfälische Technische Hochschule Aachen, 2001]

So beschreibt US 7977449 B2 ein Granulat basierend auf einer Polyamid-Matrix mit stark verzweigter Molekularstruktur und mit parallel zur Länge der einzelnen Granulatkörner ausgerichteten Langfasern und ein Verfahren, bei dem Langfasern und eine Polyamid-Matrix mit stark verzweigter Molekularstruktur in Kontakt gebracht werden.

US 8476355 B2 beschreibt ein Verfahren, bei dem Glasfasern mit einer Länge von 5 bis 20 mm erst mit einem thermoplastischen Harz von niedriger Viskosität imprägniert und die Mischung anschließend zu einem thermoplastischen Harz mit höherer Viskosität gegeben wird.

Des Weiteren beschreibt WO 2011/134930 A1 thermoplastische Polyamid-Formmassen, die neben einem faserförmigen Verstärkungsstoff mit einer Faserlänge von 3 bis 24 mm auch noch unpolares Polyolefin auf Basis von Ethylen oder Propylen sowie optional noch nanopartikuläres Oxid oder Oxidhydrat enthalten.

Im zitierten Stand der Technik wird jedoch nicht das Problem adressiert, dass in den dort beschriebenen Verfahren, in denen Langfaserverstärkungen mit einer Polyamidschmelze imprägniert werden, die Polyamidschmelze zu Emissionen neigt.

In US-A 5204396 werden solche Emissionen aus Langfaser-verstärkten Polyamid-Formmassen in derartigen Prozessen in Form von Rauch durch den Einsatz von Verarbeitungshilfsmitteln, bevorzugt Metallsalzen von Fettsäuren mit 22 bis 32 Kohlenstoffatomen, insbesondere durch den Einsatz von Lithium-, Zink-, Calcium- oder Aluminiumsalzen der Behensäure, Triacontansäure, Dotriacotansäure oder Erucasäure, reduziert. Trotz Verwendung der aus US-A 5204396 bekannten Verarbeitungshilfsmittel neigen Langfaser-verstärkte Polyamid-Schmelzen jedoch immer noch zu signifikanten Emissionen.

EP 2573138 A1 betrifft Polyamid Formmassen zur Herstellung von Fasern, Folien und Formkörpern. Die darin beschriebenen Beispiele betreffen unter anderem Formmassen enthaltend Polyamid 6, endlose Glasfaserstränge, N,N'-Ethylenbisstearamid als Amidwachs sowie einen Hitzestabilisator.

US 2005/250885 A1 offenbart Zusammensetzungen auf Basis Langfaser verstärkter Polyamide auf Basis von PA6 und PA66, wobei die Zusammensetzungen der Beispiele 27 bis 30 zusätzlich Langglasfasern, ein Amidwachs und einen Hitzestabilisator enthalten.

Ferner lehrt US 2014/051795 A1 unter anderem Zusammensetzungen auf Basis Langfaser verstärkter PA6/PA66 Blends (Tabelle 3), die zusätzlich einen Hitzestabilisator und ein Amidwachs enthalten.

DE 10 2008 052055 A1 beschreibt eine Zusammensetzung aus Polyamid 6, Glasfasern (CS7928 der Lanxess Deutschland GmbH), Montanesterwachs sowie den Einsatz von Kaliumbromid und Kupfer(1)iodid als Hitzestabilisatoren.

US 2009/069478 A1 betrifft Polyamid Zusammensetzungen mit reduzierten Emissionen in Prozessen. Diese Zusammensetzungen enthalten PA6 Copolyamid, Esterwachs sowie Glasfasern ECS03-615 mit einer Faserlänge von 3mm und einem Faserdurchmesser von 9 µm.

EP2881438A1 betrifft schließlilch Zusammensetzungen auf Basis wenigstens eines Polyamids enthaltend a) ein Polyamid wie PA6, PA66 oder ein Copolyamid von PA6 oder PA66, b) ein Polyol und c) ein Copolymerisat sowie d) 5-80 Gew.-% wenigstens eines Füll- oder Verstärkungsstoffes.

Die **Aufgabe der vorliegenden Erfindung** bestand daher in der Bereitstellung eines Verfahrens zur Verhinderung oder Reduktion von Emissionen während der Verarbeitung Langfaser-verstärkter PA6- oder PA66 basierter oder auf Copolyamiden von PA6 oder PA66 basierenden Formmassen.

Unter Emissionen im Sinne der vorliegenden Erfindung werden leicht- bis mittelflüchtige organische Substanzen verstanden, vorzugsweise Kohlenwasserstoffe, Alkohole, Aldehyde, organische Säuren sowie Monomere der als Edukte einzusetzenden Polyamide bzw. deren Zersetzungsprodukte. Bei den zu verhindernden oder zu reduzierenden Emissionen handelt es sich erfindungsgemäß bevorzugt um in Form von Rauch auftretende Zersetzungsprodukte des oder der eingesetzten Polyamide. Im Rahmen der vorliegenden Anmeldung wurde als Emission des PA6 das Monomer Caprolactam gemessen. Die im Rahmen der vorliegenden Anmeldung als Emissionen zu bestimmenden Monomere des PA66 sind entweder Hexan-1,6-Diamin oder Adipinsäure. Die Charakterisierung der Rauchentwicklung erfolgt im Rahmen der vorliegenden Erfindung durch Bestimmung der optischen Rauchdichte in Anlehnung an EN ISO 5659-2, wobei die zu untersuchende Zusammensetzung in Garnulatform einer solchen Bestrahlungsstärke ausgesetzt wird, indem auf 280 °C erhitzt wird.

**Überaschenderweise wurde gefunden,** dass solche Emissionen bei der Verarbeitung einer Polyamidschmelze mit Langfasern durch Zugabe wenigstens eines Wärmestabilisators und durch die Verwendung wenigstens eines Amid- und/oder wenigstens eines Esterwachses als Entformungshilfsmittel deutlich verringert werden können.

**Die Lösung der Aufgabe** und damit Gegenstand der vorliegenden Erfindung ist ein Verfahren zur Verhinderung oder zur Reduktion von Emissionen während der Verarbeitung Langfaser-verstärkter PA6- oder PA66-basierter oder auf Copolyamiden von PA6 oder PA66 basierenden Formmassen, dadurch gekennzeichnet, dass wenigstens ein Wärmestabilisator und wenigstens ein Amidwachs und/oder wenigstens ein Esterwachs vermischt wird und die Langfaserverstärkung(en) zu mindestens 90 Gew.-% aus Fasern mit einem Faserdurchmesser im Bereich von 5 bis 25 µm bestehen, wovon mindestens 80% der Fasern eine Länge von wenigstens 5 mm aufweisen, und die Langfaserverstärkung bis zu 10 Gew.-% wenigstens eines Zusatzstoffes enhält, wobei es sich bei den Emissionen um Kohlenwasserstoffe, Alkohole, Aldehyde, organische Säuren sowie Monomere der als Edukte einzusetzenden Polyamide bzw. deren Zersetzungsprodukte handelt und als Wärmestabilisator wenigstens eine Komponente aus der Gruppe der Kupferverbindungen, der sterisch gehinderten Phenole, der Phosphite, der Phosphate, der Hydrochinone, der aromatischen sekundären Amine, der substituierten Resorcine, der Salicylate, der Benzotrizole oder der Benzophenone, sowie verschieden substituierte Vertreter dieser Komponenten und/oder deren Mischungen eingesetzt wird.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

Bevorzugt betrifft die vorliegende Erfindung das oben beschriebene Verfahren, wobei in den Formmassen die einzusetzenden Edukte wie folgt eingesetzt werden:
a) 15 bis 89,79 Gew.-% PA6 oder PA66 oder ein Co-Polyamid von PA6 oder PA66,
b) 0,01 bis 2 Gew.-% wenigstens eines Wärmestabilisators und
c) 0,05 bis 3 Gew.-% wenigstens eines Amidwachses und/oder wenigstens eines Esterwachses sowie
d) 10,1 bis 80 Gew.-% Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen und die Langfaserverstärkung bis zu 10 Gew.-% wenigstens eines Zusatzstoffes enthält,
wobei die Summe aller Gewichtsprozente der Komponenten a) bis d) stets 100 ergibt und die Langfaserverstärkung bis zu 10 Gew.-% wenigstens eines Zusatzstoffes enthält.

Die Herstellung der Zusammensetzungen für die Formmassen erfolgt durch Mischen der als Edukte einzusetzenden Komponenten a) bis d) in wenigstens einem Mischwerkzeug. Hierbei werden als Zwischenprodukte Formmassen erhalten. Die Formmassen können entweder ausschließlich aus den Komponenten a) bis d) bestehen oder aber zusätzlich zu den Komponenten a) bis d) noch weitere Komponenten enthalten. In diesem Fall sind die Komponenten a) bis d) im Rahmen der angegebenen Mengenbereiche so zu variieren, dass die Summe aller Gewichtsprozente stets 100 ergibt.

Im Rahmen der vorliegenden Erfindung bedeutet in einem Mischwerkzeug bevorzugt in wenigstens einem Mischwerkzeug, besonders bevorzugt in einem Mischwerkzeug, ganz besonders bevorzugt in einem Extruder mit Extruderschnecke. In einem Presswerkzeug bedeutet bevorzugt in wenigstens einem Presswerkzeug, besonders bevorzugt in einem Presswerkzeug, ganz besonders bevorzugt in einer Doppelbandpresse. Ein Werkzeugauslass bedeutet bevorzugt wenigstens ein Werkzeugauslass, besonders bevorzugt ein Werkzeugauslass, ganz besonders bevorzugt ein Extruderauslass, insbesondere eine Düse, insbesondere ganz besonders bevorzugt eine Breitschlitzdüse.

In einer Ausführungsform handelt es sich bei den Zusammensetzungen um **Granulate.** Diese haben bevorzugt eine Länge von wenigstens 5 mm.

In einer weiteren Ausführungsform sind die Zusammensetzungen aus den **Granulaten** durch Extrusion oder Spritzguss herzustellende **Zwischenprodukte** oder durch Pressvorgänge herzustellende **endlosfaserverstärkte Halbzeuge,** sowie um wiederum aus diesen Zwischenprodukten und endlosfaserverstärkten Halbzeugen herzustellende **Erzeugnisse, Formteile oder Bauteile.**

**Endlosfaserverstärkte Halbzeuge** im Sinne der vorliegenden Erfindung werden im Stand der Technik auch als plattenförmige oder faserverstärkte Verbundwerkstoffe, laminierte Formkörper oder Laminate, Faserverbundstruktur, Faserverbundhalbzeug, textiles Halbzeug, FV-Thermoplast, Komposit (Struktur), Organoblech etc. bezeichnet.

Handelt es sich bei den Erzeugnissen um **endlosfaserverstärkte Halbzeuge** oder um daraus herzustellende Erzeugnisse, Bauteile oder Formteile, so weist die Langfaserverstärkung und die darin verwendeten Langfasern eine Länge bis hin zu mehreren Metern auf. Eine Limitierung der Langfaserlänge in der Langfaserverstärkung bzw. in erfindungsgemäßen Erzeugnissen in Form von Halbzeugen, sowie den aus diesen Halbzeugen herzustellenden **Erzeugnissen,** ergibt sich allenfalls aus der Handhabbarkeit, dem Transport etc. dieser Halbzeuge und Erzeugnisse.

Die Zusammensetzungen in Form von **Granulaten** zeichnen sich in bevorzugter Form dadurch aus, dass die Langfasern zusätzlich zur Bedingung, dass diese einen Faserdurchmesser im Bereich von 5 bis 25 µm und 80% eine Mindestlänge von wenigstens 5 mm haben, eine parallele Ausrichtung zur Länge der einzelnen Granulatkörner aufweisen.

Besonders bevorzugt besitzen die Granulate eine zylindrische Form oder eine Würfelform. Insbesondere bevorzugt ist eine zylindrische Form.

Bevorzugt liegt die Länge der Langfasern in den **Granulaten** im Bereich von 5 mm bis 20 mm. Durch nachfolgende Verarbeitungsprozesse, insbesondere Mischprozesse, in einem Mischwerkzeug, in einer Extrusion oder im Spritzguss, kann verarbeitungsbedingt eine Verkürzung der Langfasern auf Längen im Bereich von 100 bis 150 µm eintreten.

Da die meisten Verarbeiter Kunststoff in Form von Granulat benötigen, spielt das Granulieren eine immer wichtigere Rolle. Man unterscheidet grundsätzlich zwischen Heiß- und Kaltabschlag. Je nach Verarbeitung resultieren daraus verschiedene Kornformen. Im Falle der Heißabschlags erhält man das Granulat in Perlen oder Linsenkornform, im Falle des Kaltabschlags erhält man das Granulat in Zylinderformen oder Würfelformen. Zusammensetzungen in Granulatform werden bevorzugt durch Kaltabschlag erhalten. Hierzu wird der Austrittsstrang der durch Mischen der Komponenten a) bis d) im Mischwerkzeug erhaltenen Formmasse aus einem Mischwerkzeug, bevorzugt der Extrusionsstrang aus einem Extruder, direkt nach dem Mischwerkzeugauslass, bevorzugt nach wenigstens einer Austrittsdüse aus einem Extruder, durch ein Wasserbad gezogen und anschließend in festem Zustand durch einen Granulator, bevorzugt durch eine rotierende Messerwalze, in die für das herzustellende Granulat gewünschte Länge geschnitten.

Bevorzugt erfolgt die Verhinderung oder die Reduktion von Emissionen aus PA6- und/oder PA66-basierten oder auf Copolyamiden von PA6 oder PA66 basierenden Formmassen die in der Schmelze vorliegen. Bevorzugt fallen diese Schmelzen in Verarbeitungsprozessen der PA6- oder PA66-basierten oder auf Copolyamiden von PA6 oder PA66 basierenden Formmassen an, bevorzugt in Extrusionsprozessen, beim Spritzguss oder bei einem Pressvorgang in einem Presswerkzeug, bevorzugt in Doppelbandpressen.

Ein **Verfahren** zur Herstellung von Zusammensetzungen, ist gekennzeichnet, indem man als Edukte
a) Polyamid 6 (PA6) oder Polyamid 66 (PA66) oder ein Co-Polyamid von PA6 oder PA66,
b) wenigstens einen Wärmestabilisator und
c) wenigstens ein Amidwachs und/oder wenigstens ein Esterwachs
   (Ia) bei Temperaturen im Bereich von 220 bis 400 °C, bevorzugt im Bereich von 240 bis 380 °C, besonders bevorzugt im Bereich von 250 °C bis 350 °C und bei Drücken im Bereich von 2 bis 50 bar, bevorzugt im Bereich von 5 bis 40 bar, besonders bevorzugt im Bereich von 10 bis 35 bar in einem Mischwerkzeug (1) vermischt und aufschmilzt,
   (Ib) danach die Komponente d) in Form von Fasern zur Schmelze enthaltend die Komponenten a) bis c) im Mischwerkzeug (1) hinzu gibt und vermischt, und schließlich
   (Ic) die Schmelze enthaltend die Komponenten a) bis d) aus dem Mischwerkzeug (1) austrägt und gegebenenfalls weiteren Verarbeitungsschritten unterwirft,
      oder nach dem Verfahrensschritt (Ia)
   (IIb) die Schmelze enthaltend die Komponenten a) bis c) aus dem Mischwerkzeug (1) in ein Mischwerkzeug (2) überführt und die Komponente d) in Form von Fasern oder Garnen der Schmelze im Mischwerkzeug (2) zuführt und mit dieser Schmelze imprägniert, und
   (IIc) danach die Schmelze enthaltend die Komponenten a) bis d) im Mischwerkzeug (2) über einen Mischwerkauslass austrägt und gegebenenfalls weiteren Verarbeitungsschritten unterwirft,
      oder nach dem Verfahrensschritt (Ia)
   (IIIb) die Komponente d) in Form von Fasern oder Garnen in dasselbe Mischwerkzeug (1) des Verfahrensschrittes (Ia) dosiert, und
   (IIIc) danach die Schmelze enthaltend die Komponenten a) bis d) über einen Mischwerkzeugauslass austrägt und gegebenenfalls weiteren Verarbeitungsschritten unterwirft,
      oder nach dem Verfahrensschritt (Ia)
   (IVb) die Schmelze aus dem Mischwerkzeug (1) über einen Mischwerkzeugauslass mit wenigstens zwei Lagen der in zweidimensionaler Form vorliegenden Komponente d) in Kontakt gebracht wird, und
   (IVc) diese Mischung der Komponenten a) bis d) in ein Presswerkzeug überführt und miteinander zu einem Erzeugnis verpresst,
      wobei Komponente d) eine Langfaserverstärkung ist, die zu mindestens 90 Gew.-% Fasern mit einem Faserdurchmesser im Bereich von 5 bis 25 µm enthält wovon mindestens 80 % eine Länge von wenigstens 5 mm aufweisen.

Durch die Variante (IVb) und (IVc) erhält man Erzeugnisse, die bevorzugt die Form zweidimensionaler Halbzeuge besitzen und als **endlosfaserverstärkte Halbzeuge** bezeichnet werden.

Das Produkt erhältlich nach diesem Verfahren wird im Rahmen der vorliegenden Erfindung auch als "Imprägnat" bezeichnet. Unter Imprägnieren wird im Sinne dieser Erfindung der Schritt verstanden, bei dem die Komponente d) mit der Schmelze enthaltend die Komponenten a) bis c) in Kontakt gebracht und gemischt wird.

Es gibt die Verfahrensvarianten:
i) (Ia), (Ib) und (Ic)
ii) (Ia), (IIb) und (IIc)
iii) (Ia), (IIIb) und (IIIc) sowie
iv) (Ia), (IVb) und (IVc).

In einer Ausführungsform wird in einem weiteren, sich an die Verfahrensschritte (Ic), (IIc) oder (IIIc) anschließenden Verarbeitungsschritt (V), das Imprägnat portioniert.

In einer Ausführungsform wird in einem weiteren, sich an den Verfahrensschritt (V) anschließenden Verarbeitungsschritt (VI) das portionierte Imprägnat in ein formgebendes Presswerkzeug überführt und dort in die Form eines Erzeugnisses, Halbzeugs oder Bauteils überführt.

Zusammensetzungen gemäß des Standes der Technik neigen besonders bei den Verfahrensschritten des Austragens, Portionierens oder bei der Überführung in die weitere Verarbeitung eines Imprägnats zu hohen Emissionen. Überraschenderweise werden diese Emissionen im Falle von Langfaser-verstärkten PA6- oder PA66-basierten Zusammensetzungen oder auf Copolyamiden von PA6 oder PA66 basierenden Zusammensetzungen durch Verwendung der erfindungsgemäßen Kombination von wenigstens einem Wärmestabilisator und wenigstens einem Amidwachs und/oder wenigstens einem Esterwachs deutlich reduziert.

In der Verfahrensvariante mit den **Schritten (Ia), (IIb) und (IIc)** wird zunächst im Verfahrensschritt (Ia) eine Zusammensetzung enthaltend die Komponenten a) bis c) in wenigstens ein Mischwerkzeug (1) dosiert, dort aufgeschmolzen und vermischt. Anschließend wird die Schmelze in wenigstens ein Mischwerkzeug (2) überführt und im Verfahrensschritt (IIb) die Komponente d) der Schmelze zugeführt und mit der Schmelze vermischt, wobei in diesem Fall als Komponente d) Fasern oder Garne eingesetzt werden. Über die Zahl der Garne kann der Fasergehalt der resultierenden Zusammensetzung eingestellt werden. Nach der Imprägnierung der Komponente d) im Mischwerkzeug (2) wird das Imprägnat über einen Mischwerkzeugauslass, bevorzugt einen Extruderauslass, besonders bevorzugt eine Düse, ganz besonders bevorzugt eine Breitschlitzdüse, ausgetragen. Diese Verfahrensvariante ist dadurch charakterisiert, dass die Verfahrensschritte (Ia), (IIb) in zwei verschiedenen Mischwerkzeugen durchgeführt.

In der Verfahrensvariante mit den **Schritten (Ia), (IIIb) und (IIIc)** wird zunächst im Verfahrensschritt (Ia) eine Zusammensetzung enthaltend die Komponenten a) bis c) in ein Mischwerkzeug (1) dosiert, aufgeschmolzen und vermischt und im Verfahrensschritt (IIIb) die Komponente d) in dasselbe Mischwerkzeug (1) dosiert, wobei als Komponente d) Fasern oder Garne eingesetzt werden. Nach der Imprägnierung der Komponente d) wird das Imprägnat über wenigstens einen Mischwerkzeugauslass, bevorzugt einen Extruderauslass, besonders bevorzugt eine Düse, ganz besonders bevorzugt eine Breitschlitzdüse, ausgetragen. In dieser Verfahrensvariante werden die Verfahrensschritte (la) und (IIIb)) in demselben Mischwerkzeug (1) durchgeführt.

In einer bevorzugten Ausführungsform wird in allen Verfahrensvarianten eine Zusammensetzung enthaltend die Komponenten a) bis c) als Vormischung eingesetzt.

In einer bevorzugten Ausführungsform wird in allen Verfahrensvarianten die Komponente d) vor der Dosierung vorgewärmt.

In bevorzugter Ausführungsform werden in allen Verfahrensvarianten, insbesondere in der Verfahrensvariante, die durch die **Schritte (Ia), (IVb) und (IVc)** gekennzeichnet ist, die Komponente d) in zweidimensionaler Form eingesetzt und mit einer Schmelze enthaltend die Komponenten a) bis c) imprägniert.

Als Komponente d) in zweidimensionaler Form werden bevorzugt Gelege, Gewebe, Geflechte, Gestricke, Gesticke oder Vliese, besonders bevorzugt Gewebe, Gelege oder Vliese, ganz besonders bevorzugt Vliese, Gewebe oder Gelege aus Glasfasern oder Carbonfasern, insbesondere bevorzugt Vliese, Gewebe oder Gelege aus E-Glasfasern, eingesetzt.

In der Verfahrensvariante mit den **Schritten (Ia), (IVb) und (IVc)** wird im Verfahrensschritt (la) eine Zusammensetzung enthaltend die Komponenten a) bis c) in ein Mischwerkzeug (1) dosiert, aufgeschmolzen, vermischt und im Verfahrensschritt (IVb) über einen Mischwerkauslass, bevorzugt einen Extruderauslass, besonders bevorzugt eine Düse, ganz besonders bevorzugt eine Breitschlitzdüse, aus dem Mischwerkzeug (1) mit wenigstens zwei Lagen der in zweidimensionaler Form vorliegenden Komponente d) in Kontakt gebracht. Im daran anschließenden Verfahrensschritt (IVc) wird diese Mischung in wenigstens ein Presswerkzeug, bevorzugt in wenigstens eine Doppelbandpresse, überführt, wo die Imprägnierung der Komponente d) abgeschlossen und das Imprägnat in die Form eines Erzeugnisses, bevorzugt in die Form eines zweidimensionalen Halbzeugs, gebracht wird.

Bevorzugt wird das Verfahren mit den **Verfahrensschritten (Ia), (IVb) und (IVc)** auch für die Herstellung von Halbzeugen oder Erzeugnissen mit drei oder mehr Lagen der Komponente d) eingesetzt, indem eine definierte Zahl n Extrudate enthaltend die Komponenten a) bis c) ausgetragen und zwischen n+1 Lagen der Komponente d) abgelegt werden.

In allen Ausführungsformen des erfindungsgemäßen Verfahrens werden als Mischwerkzeuge bevorzugt Extruder eingesetzt. Dem Fachmann steht es jedoch frei, alternative Mischwerkzeuge in den jeweiligen Verfahrensschritten einzusetzen, die geeignet sind, ein optimales Mischergebnis hinsichtlich einer Mischung der Komponenten a) bis c) bzw. a) bis d) in den erfindungsgemäßen Zusammensetzungen zu erzielen. Ein Extruder ist ein bevorzugtes Mischwerkzeug im Sinne der vorliegenden Erfindung.

Bevorzugt als Mischwerkzeuge (1) und (2) einzusetzende Extruder sind Einschneckenextruder oder Doppelschneckenextruder sowie die jeweiligen Untergruppen, ganz besonders bevorzugt konventionelle Einschneckenextruder, förderwirksame Einschneckenextruder, gegenläufige Doppelschneckenextruder oder gleichläufige Doppelschneckenextruder, eingesetzt. Die als Mischwerkzeuge einzusetzenden Extruder (1) und (2) sind dem Fachmann aus Technische Thermoplaste 4. Polyamide, Hrsg.: G. W. Becker und D. Braun, Carl Hanser Verlag, 1998, S. 311-314 sowie K. Brast, Dissertation "Verarbeitung von Langfaser-verstärkten Thermoplasten im direkten Plastifizier-/Pressverfahren", Rheinisch-Westfälische Technische Hochschule Aachen, 2001, S. 30 - 33 bekannt.

Das in der Verfahrensvariante mit den **Schritten (Ia), (IIb) und (IIc)** einzusetzende Mischwerkzeug (2) wird bevorzugt bei Temperaturen im Bereich von 250 bis 350 °C und bei Drücken im Bereich von 10 bis 35 bar betrieben.

In der Verfahrensvariante mit den **Schritten (Ia), (IVb) und (IVc)** wird im Verfahrensschritt (IVc) ein Presswerkzeug, bevorzugt wenigstens eine Doppelbandpresse eingesetzt. Das Presswerkzeug, bevorzugt die Doppelbandpresse(n) werden bevorzugt bei Temperaturen im Bereich von 250 bis 350 °C und bei Drücken im Bereich von 10 bis 35 bar betrieben. Erfindungsgemäß einzusetzende Doppelbandpressen sind beispielsweise erhältlich bei Hymmen Industrieanlangen GmbH, Bielefeld, Deutschland.

### Komponente a)

Die als Komponente a) einzusetzenden Polyamide sind PA6 oder PA66 oder ein Co-Polyamid von PA6 oder PA66.

Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer α,ω- Aminocarbonsäure bzw. von dem davon abgeleiteten Lactam, im Falle des PA6 also dem ε-Caprolactam, ausgegangen worden ist; im Übrigen sei verwiesen auf H. Domininghaus, Die Kunststoffe und ihre Eigenschaften, Seiten 272 ff., VDI-Verlag, 1976**.**

Bevorzugt besitzt das als Komponente a) einzusetzende Polyamid eine Viskositätszahl bestimmt in einer 0,5 gew.-%igen Lösung in 96 gew.-%iger Schwefelsäure bei 25 °C gemäß ISO 307 im Bereich von 80 bis 180 ml/g, besonders bevorzugt im Bereich von 90 bis 160 ml/g eingesetzt.

Besonders bevorzugt wird als Komponente a) PA6 eingesetzt, ganz besonders bevorzugt ein PA6 mit einer Viskositätszahl bestimmt in einer 0,5 gew.-%igen Lösung in 96 gew.-%iger Schwefelsäure bei 25 °C gemäß ISO 307 zwischen 95 und 120 ml/g.

Die in den Zusammensetzungen einzusetzenden Polyamide können nach verschiedenen Verfahren hergestellt werden und aus unterschiedlichen Bausteinen synthetisiert. Zur Herstellung von Polyamiden sind eine Vielzahl von Verfahrensweisen bekannt, wobei je nach gewünschtem Endprodukt unterschiedliche Monomerbausteine sowie, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der einzusetzenden Polyamide verlaufen meist über die Polykondensation in der Schmelze. Im Rahmen der vorliegenden Erfindung wird auch die hydrolytische Polymerisation von Lactamen als Polykondensation verstanden.

Die als Komponente a) einzusetzenden Polyamide PA6 und/oder PA66 sind bevorzugt semikristalline Polyamide mit einem Schmelzpunkt von mindestens 180 °C. Semikristalline Polyamide besitzen gemäß DE 10 2011 084 519 A1 eine Schmelzenthalpie von 4 bis 25 J/g, gemessen mit der DSC-Methode gemäß ISO 11357 beim 2. Aufheizen und Integration des Schmelzpeaks. Im Gegensatz dazu besitzen amorphe Polyamide eine Schmelzenthalpie von weniger als 4 J/g, gemessen mit der DSC-Methode gemäß ISO 11357 beim 2. Aufheizen und Integration des Schmelzpeaks.

### Komponente b)

Als Komponente b) wird wenigstens eine Komponente aus der Gruppe der Kupferverbindungen, der sterisch gehinderten Phenole, der Phosphite, der Phosphate, der Hydrochinone, der aromatischen sekundären Amine, der substituierten Resorcine, der Salicylate, der Benzotriazole oder der Benzophenone, sowie verschieden substituierte Vertreter dieser Komponente und/oder deren Mischungen eingesetzt.

Bevorzugte Kupferverbindungen sind Kupferhalogenide, die wiederum bevorzugt in Kombination mit Alkalimetall- und/oder Erdalkalimetallhalogeniden eingesetzt werden. Erfindungsgemäß besonders bevorzugt wird wenigstens ein Kupferhalogenid der Gruppe Kupferchlorid, Kupferbromid und Kupferiodid in Kombination mit wenigstens einem Natrium- oder Kaliumhalogenid der Gruppe Natriumchlorid, Natriumbromid, Natriumiodid, Kaliumchlorid, Kaliumbromid und Kaliumiodid eingesetzt. Insbesondere bevorzugt wird Kupfer(I)iodid mit Kaliumbromid eingesetzt.

Bevorzugt werden als Komponente b) auch sterisch gehinderte Phenole und/oder Kupferhalogenide in Kombination mit Alkali- und/oder Erdalkalimetallhalogeniden eingesetzt.

Sterisch gehinderte Phenole sind Verbindungen mit phenolischer Struktur, die am phenolischen Ring mindestens eine sterisch anspruchsvolle Gruppe aufweisen. Sterisch anspruchsvolle Gruppen im Sinne der vorliegenden Erfindung sind bevorzugt tert.-Butyl-gruppen, Isopropylgruppen und mit sterisch anspruchsvollen Gruppen substituierte Arylgruppen, insbesondere tert.-Butylgruppen.

Ganz besonders bevorzugte sterisch gehinderte Phenole werden ausgewählt aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thio-triazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-ben-zol, 4,4'-Methylen-bis-(2,6-di-tert.-butylphenol), 3,5-Di-tert.-butyl-4-hydroxybenzyldimethylamin.

Insbesondere bevorzugte sterisch gehinderte Phenole werden ausgewählt aus der Gruppe 2,2'-Methylen-bis-(4-methyl-6-tert.-butylphenol), 1,6-Hexandiol-bis-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, Ludwigshafen, Deutschland.

Erfindungsgemäß insbesondere ganz besonders bevorzugt wird als sterisch gehindertes Phenol N,N'-Hexamethylen-bis-3,5-di-tert.-butyl-4-hydroxyhydrocinnamid [CAS Nr. 23128-74-7] eingesetzt, das als Irganox® 1098 bei der BASF SE, Ludwigshafen, Deutschland erhältlich ist.

### Komponente c)

Die als Komponente c) einzusetzenden Amidwachse sind bevorzugt Verbindungen, die mittels einer Kondensationsreaktion von langkettigen Carbonsäuren mit mono- oder polyfunktionalen Aminen hergestellt werden können.

Erfindungsgemäß bevorzugt werden für die Synthese der Amidwachse verzweigte oder lineare langkettige aliphatische Carbonsäuren mit mehr als 11 Kohlenstoffatomen eingesetzt. Besonders bevorzugt liegt die Kettenlänge der aliphatischen Carbonsäuren im Bereich von 12 bis 36 Kohlenstoffatomen. Ganz besonders bevorzugt sind aliphatische Carbonsäuren, deren Kettenlänge im Bereich von 14 bis 22 Kohlenstoffatomen liegt. Insbesondere bevorzugt sind lineare gesättigte aliphatische Carbonsäuren mit einer Kettenlänge im Bereich von 14 bis 22 Kohlenstoffatomen. Insbesondere besonders bevorzugt ist der Einsatz wenigstens einer Carbonsäure der Gruppe Laurinsäure, Isotridecansäure, Myristinsäure, Palmitinsäure, Margarinsäure, Stearinsäure, Isostearinsäure, Arachinsäure, Behensäure, Lignocerinsäure, Cerotinsäure, Montansäure, Melissinsäure, Myristoleinsäure, Palmitoleinsäure, Petroselinsäure, Ölsäure, Elaidinsäure, Vaccensäure, Gadoleinsäure, Icosensäure, Cetoleinsäure, Erucasäure, Nervonsäure, Linolsäure, Linolensäure, Calendulasäure, Elaeostearinsäure, Punicinsäure, Arachidonsäure, Timmodonsäure, Clupanodonsäure und Cervonsäure sowie deren technische Mischungen Insbesondere ganz besonders bevorzugt ist der Einsatz wenigstens einer Carbonsäure der Gruppe Margarinsäure, Stearinsäure, Arachinsäure und Behensäure, insbesondere wird Stearinsäure bevorzugt.

Die aliphatischen Carbonsäuren zur Synthese der als Komponente c) einzusetzenden Amidwachse können alleine oder in Mischung eingesetzt werden. Bevorzugt werden technische aliphatische Carbonsäuren eingesetzt, die normalerweise als Mischung von Carbonsäuren mit unterschiedlicher Kettenlänge vorliegen, wobei eine Kettenlänge dominiert. Besonders bevorzugt wird technische Stearinsäure eingesetzt, die hauptsächlich Stearinsäure sowie in geringeren Mengen Palimitinsäure und andere Carbonsäuren enthält.

Als mono- oder polyfunktionale Amine werden Alkylamine mit einer oder mehreren Amingruppen eingesetzt, wobei die Amingruppen primärer oder sekundärer Natur sein können und die Alkylkomponente gesättigt oder ungesättigt sein kann und weitere Substituenten enthalten kann. Bevorzugt finden Alkylamine mit endständigen primären Amingruppen Verwendung. Besonders bevorzugt sind lineare gesättigte Alkylamine mit zwei endständigen primären Amingruppen. Ganz besonders bevorzugt wird zur Synthese der erfindungsgemäß einzusetzenden Amidwachse Ethylendiamin eingesetzt.

Die als Komponente c) einzusetzenden Esterwachse sind Verbindungen, die mittels einer Kondensationsreaktion mindestens einer langkettigen monofunktionellen, aliphatischen Carbonsäure mit einem Alkohol hergestellt werden können.

Erfindungsgemäß bevorzugte Esterwachse sind Ester der bereits oben beschriebenen aliphatischen Carbonsäuren mit mehr als 11 Kohlenstoffatomen.

Für die Alkoholkomponente des Esterwachses werden bevorzugt ungesättigte oder gesättigte Alkylverbindungen mit mindestens einer Hydroxylgruppe eingesetzt, wobei die Hydroxylgruppen primär, sekundär oder tertiär sind. Besonders bevorzugt werden gesättigte Alkyl-verbindungen mit 1 bis 8 primären oder sekundären Hydroxylgruppen eingesetzt. Ganz besonders bevorzugt werden lineare gesättigte Alkylverbindungen mit 1 bis 4 primären oder sekundären Hydroxylgruppen eingesetzt.

Insbesondere bevorzugt wird wenigstens ein Alkohol der Reihe Erythrit, Pentaerythrit, Glyzerin, Ethylenglykol sowie deren technische Mischungen eingesetzt.

Insbesondere besonders bevorzugt wird als Esterwachs der Komponente c) N,N'-Ethylenbisstearamid eingesetzt. Insbesondere ganz besonders bevorzugt wird N,N'-Ethylenbisstearamid, hergestellt aus technischer Stearinsäure, eingesetzt, die eine Mischung der reinen Stearinsäure mit weiteren Carbonsäuren, hauptsächlich Palmitinsäure, ist.

### Komponente d)

Eine Langfaserverstärkung als Komponente d) im Sinne der vorliegenden Erfindung zeichnet sich dadurch aus, dass sie zu mindestens 90 Gew.-% aus Fasern besteht wovon mindestens 80 % eine Länge von mindestens 5 mm, bevorzugt mindestens 20 mm aufweisen. Die einzelnen Fasern der Langfaserverstärkung haben im Mittelwert einen Durchmesser von 5 bis 25 µm, bevorzugt von 5 bis 20 µm, besonders bevorzugt 8 bis 18 µm. Die Obergrenze der Faserlänge in der Langfaserverstärkung wird, wie oben beschrieben, im jeweiligen Erzeugnis durch die Verarbeitungsweise festgelegt.

Dem Fachmann ist der Einsatz von Langfaserverstärkungen zur Herstellung faserverstärkter Kunststofferzeugnisse prinzipiell bekannt, beispielsweise aus DE 19756126 A1**,** deren Inhalt von der vorliegenden Anmeldung vollumfänglich mit umfasst wird. DE 10 2007 007 443 A1 offenbart zudem ein Verfahren zur Herstellung von Kunststoffplatten mit einer Langfaserverstärkung, worin ein Mischvlies zum Einsatz kommt. Thermoplastische Faser-Matrix-Halbzeuge werden gemäß Schürmann, "Konstruieren mit Faser-Kunststoff-Verbunden", Springer-Verlag Berlin Heidelberg 2005, 2007, Seiten 156-157 in folgende Gruppen unterteilt:
- Mit Langfasern verstärkte Systeme:
   - GMT: glasmattenverstärkte Thermoplaste;
   - LFT: langfaserverstärkte Thermoplaste
- Mit Endlosfasern verstärkte Systeme: Thermoplastische Prepregs Bevorzugt wird als Langfaserverstärkung wenigstens eine Langfaser aus der Gruppe der
   - Glasfasern (Oberbach, Baur, Brinkmann, Schmachtenberg, "Saechtling Kunststoff Taschenbuch", Carl Hanser Verlag München Wien 2004, Seiten 644-647),
   - metallisierten Glasfasern
   - Kohlenstofffasern (Oberbach, Baur, Brinkmann, Schmachtenberg, "Saechtling Kunststoff Taschenbuch", Carl Hanser Verlag München Wien 2004, Seite 648),
   - Naturfasern (Oberbach, Baur, Brinkmann, Schmachtenberg, "Saechtling Kunststoff Taschenbuch", Carl Hanser Verlag München Wien 2004, Seiten 650-652, 778-779),
   - Kunststofffasern, insbesondere Hochtemperatur-Kunststofffasern (Oberbach, Baur, Brinkmann, Schmachtenberg, "Saechtling Kunststoff Taschenbuch", Carl Hanser Verlag München Wien 2004, Seiten 648-650), bevorzugt Aramidfasern (Kunststoff-Handbuch, Bd. 3/4, Seiten 106-107, Carl Hanser Verlag München Wien 1998),
   - Stahlfasern,
   - Mineralfasern, insbesondere Basaltfasern
eingesetzt.

Erfindungsgemäß als Komponente d) einzusetzende Langfasern können Endlos-Fasern sein, die gemäß DIN 60000 ein linienförmiges Gebilde von praktisch unbegrenzter Länge, das sich textil verarbeiten lässt, darstellen. Als Langfasern werden gemäß "http://de.wikipedia.org/wiki/Langfaser" aber auch Naturfasern bezeichnet, die eine Länge von über 100 mm haben. Sie stellen das Zielprodukt des traditionellen Faseraufschlusses dar und sind im Vergleich zur Herstellung von Kurzfasern, bei denen die vollständigen Fasern genutzt werden (Gesamtlinie), aufwändiger zu gewinnen und zu verarbeiten. Sie werden vor allem in der Textilproduktion verwendet. Länger als Langfasern sind nur Filamente wie z.B. Seide oder Kunstfaserfilamente, die nur durch das Spulenvolumen begrenzt werden. Bei Chemiefasern spricht man von Filamenten wohingegen die einzige in der Natur vorkommende textile Endlos-Faser Seide ist. Im Rahmen der vorliegenden Erfindung wird der Begriff Langfaser auch auf die oben genannten erfindungsgemäß einzusetzenden Fasern angewandt. Ist das Imprägnat kein Granulat, so weisen die Langfasern der Langfaserverstärkung d) bevorzugt eine Länge im Bereich von 100 mm bis 2000 mm auf.

Gemäß der vorliegenden Erfindung ist die als Komponente d) einzusetzende Langfaserverstärkung bzw. die dafür einzusetzenden Langfasern bzw. daraus hergestellte Gelege, Gewebe, Geflechte, Gestricke, Gesticke, Faserkabel, Vliese oder Rovings mit wenigstens einem Zusatzstoff oberflächenmodifiziert.

Bevorzugte **Zusatzstoffe** der Langfaserverstärkung sind auszuwählen aus der Gruppe Bindemittel, Schlichte oder Verbindungsfasern.

Erfindungsgemäß bevorzugt ist die Komponente d) oder sind die zur Herstellung der Komponente d) eingesetzten Langfasern mit einer **Schlichte** als Zusatzstoff überzogen. Besonders bevorzugt liegt der Gehalt der Schlichte im Bereich von 0,1 bis 1 Gew.-% des Gesamtgewichts der Langfaserverstärkung bzw. der einzusetzenden Langfasern.

Besonders bevorzugt handelt es sich bei der als Zusatzstoff einzusetzenden Schlichte um einen Haftvermittler bzw. Haftvermittlersystem, ganz besonders bevorzugt um einen Haftvermittler auf Silanbasis. In einer alternativen Ausführungsform ist eine Auftragung eines Zusatzstoffes oder eine Vorbehandlung mit einem Zusatzstoff nicht unbedingt erforderlich.

Insbesondere bei Verwendung von Glasfasern werden zusätzlich zu Silanen bevorzugt auch Polymerdispersionen, Emulgatoren, Filmbildner, insbesondere Polyepoxid-, Polyether-, Polyolefin-, Polyvinylacetat-, Polyacrylat- oder Polyurethanharze oder Mischungen davon, Verzweiger, weitere Haftvermittler, Gleitmittel, pH-Puffersubstanzen und/oder Glasfaserverarbeitungshilfsmittel, insbesondere Netzmittel und/oder Antistatika, verwendet. Die weiteren Haftvermittler, Gleitmittel und sonstigen Hilfsstoffe, Verfahren zur Herstellung der Schlichten, Verfahren zur Beschlichtung, d.h. das Auftragen eines Zusatzstoffes, und Nachbearbeitung der Glasfasern sind bekannt und beispielsweise in K.L. Löwenstein, "The Manufacturing Technology of Continuous Glass Fibres", Elsevier Scientific Publishing Corp., Amsterdam. London, New York, 1983, beschrieben. Die Glasfasern können über beliebige Methoden beschlichtet werden, bevorzugt mit Hilfe geeigneter Vorrichtungen, insbesondere mit Sprüh- oder Walzenapplikatoren. Auf die mit hoher Geschwindigkeit aus Spinndüsen gezogenen Glasfilamente können sofort nach ihrem Erstarren, d.h. noch vor dem Aufwickeln oder Schneiden, Schlichten als Zusatzstoff aufgetragen werden. Es ist aber auch möglich, die Fasern im Anschluss an den Spinnprozess in einem Tauchbad mit einem Zusatzstoff zu beschlichten.

Die erfindungsgemäß insbesondere bevorzugt in der Langfaserverstärkung d) einzusetzenden Glasfasern weisen bevorzugt entweder eine kreisförmige Querschnittsfläche und einen Filament-Durchmesser im Bereich von 5 bis 25 µm, bevorzugt im Bereich von 6 bis 18 µm, besonders bevorzugt im Bereich von 9 und 15 µm auf, oder sie haben eine flache Gestalt und nicht-kreisförmige Querschnittsfläche mit einer Breite der Hauptquerschnittsachse im Bereich von 6 - 40 µm und einer Breite der Nebenquerschnittsachse im Bereich von 3 - 20 µm. Die Glasfasern werden bevorzugt aus der Gruppe der E-Glasfasern, A-Glasfasern, C-Glasfasern, D-Glasfasern, S-Glasfasern und / oder R-Glasfasern ausgewählt.

Ganz besonders bevorzugt als Zusatzstoff sind Haftvermittler auf Silanbasis für die Vorbehandlung der in Komponente d) einzusetzenden Langfasern. Es handelt sich bevorzugt um Silanverbindungen der allgemeinen Formel (I)

(X-(CH₂)_{q})ₖ-Si-(O-CᵣH₂ᵣ₊₁)₄₋ₖ (I)

in der die Substituenten folgende Bedeutung haben:
- X:: NH₂-, HO-,

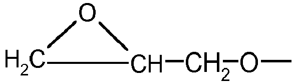

- q:: eine ganze Zahl von 2 bis 10, bevorzugt 3 bis 4,
- r:: eine ganze Zahl von 1 bis 5, bevorzugt 1 bis 2,
- k:: eine ganze Zahl von 1 bis 3, bevorzugt 1.

Ganz besonders bevorzugte Haftvermittler sind monomere organofunktionelle Silane, insbesondere 3-Aminopropyltrimethoxysilan, Aminobutyltrimethoxysilan, 3-Aminopropyltriethoxysilan, Aminobutyltriethoxysilan, 3-Aminopropyltris-methoxyethoxysilan, 3-Aminopropyl-methyl-diethoxysilan, N-Methyl-2-Aminoethyl-3-aminopropyltrimethoxysilan, N-Methyl-2-Aminoethyl-3-aminopropyl-methyl-dimethoxysilan, N-Methyl-3-aminopropyltri-methoxysilan, 3-Glycidyloxypropyltrimeth-oxysilan, 3-Methacryloxypropyltrimethoxysilan, 3-Mercaptopropyltrimethoxysilan, Vinyl-triethoxysilan, Vinyltrimethoxysilan, N-β-(aminoethyl)-γ-aminopropyltrimethoxysilan (Dynasilan® Damo von Hüls AG), N-β-(aminoethyl)-γ-aminopropyltriethoxysilan, N-β-(aminoethyl)-γ-aminopropylmethyldimethoxysilan, N-β-(aminoethyl)-N-β-(aminoethyl)-γ-aminopropyltrimethoxysilan.

Insbesondere bevorzugte Haftvermittler sind Silanverbindungen aus der Gruppe Aminopropyltrimethoxysilan, Aminobutyltrimethoxysilan, Aminopropyltriethoxysilan und Aminobutyltriethoxysilan sowie die entsprechenden Silane, welche in Formel (I) als Substituent X eine Glycidylgruppe enthalten.

Für die Ausrüstung der als Langfasern einzusetzenden Glasfasern werden die als Zusatzstoff einzusetzenden Silanverbindungen bevorzugt in Mengen im Bereich von 0,025 bis 0,4 Gew.-%, besonders bevorzugt im Bereich von 0,05 bis 0,3 Gew.-% bezogen auf die Glasfasern zur Oberflächenbeschichtung eingesetzt.

Bevorzugt werden Langfaserverstärkungen eingesetzt, in denen mehrere Langfasern zu einem Garn zusammengefasst sind. Bevorzugt werden Garne aus E-Glasfasern mit 30 bis 5000 tex und Carbonfasern mit 1.000 bis 24.000 Fasern pro Garn, besonders bevorzugt mit 2.000 bis 4.000 Fasern pro Garn, eingesetzt.

Bevorzugt werden im Falle von (IIb) und (IIIb) Garne mit gedrehten, gezwirnten oder ungedrehten Langfasern verwendet. Besonders bevorzugt werden Garne mit ungedrehten Langfasern verwendet.

Bevorzugte Langfaserverstärkungen im Sinne dieser Erfindung liegen in Form eindimensionaler, zweidimensionaler oder dreidimensionaler Struktur vor.

Eindimensionale Langfaserverstärkungen im Sinne dieser Erfindung sind die oben beschriebenen Langfasern und Garne, die direkt im erfindungsgemäßen Verfahren eingesetzt werden.

Zweidimensionale Langfaserverstärkungen im Sinne dieser Erfindung sind Vliese, Gelege, Gewebe, Geflechte und Gestricke, welche die oben erfindungsgemäß einzusetzenden Langfasern und Garne enthalten. Bevorzugte zweidimensionale Langfaserverstärkungen sind Vliese, Gewebe und Gelege.

Dreidimensionale Langfaserverstärkungen im Sinne dieser Erfindung sind Vliese, Gelege, Gewebe, Geflechte und Gestricke, welche die oben beschriebenen Langfasern und Garne enthalten und bei denen mindestens ein Teil der Langfasern und Garne eine Krümmung aufweisen. Bevorzugte dreidimensionale Langfaserverstärkungen sind Rundgeflechte, besonders bevorzugt biaxiale oder triaxiale Rundgeflechte.

Erfindungsgemäß als Komponente d) einzusetzende Langfasern bzw- Langfasergewebe sind als StarRov® bei Johns Manville erhältlich, insbesondere StarRov® LFT Plus PR 440 2400 871.

Schlichte und gegebenenfalls zusätzliche **Bindemittel,** insbesondere im Falle dass die Langfasern in Form von Gelegen, Geweben, Geflechten, Gestricken, Gesticken, Vliesen, Faserkabeln oder Rovings (**"**Maßgeschneiderte Verstärkungstextilien", Kunststoffe 06/2003, Carl Hanser Verlag, Seiten 46-49) vorliegen, summieren sich auf bis zu maximal 10 % des Gewichts der Komponente d). Bevorzugt wird in der Funktion als Zusatzstoff wenigstens ein **Bindemittel** der Reihe Acrylharze, Butadien-Styrol-Polymere, Butadien-Acrylnitril- Polymere, Polyurethane, Polyester, Polyamide oder Vinylesterharze eingesetzt, besonders bevorzugt als wässrige Dispersionen im Rahmen der Herstellung der erfindungsgemäß einzusetzenden Langfaserverstärkungen.

Im Falle, dass als Langfaserverstärkung Gelege, Gewebe, Geflechte, Gestricke, Gesticke oder Vliese eingesetzt werden, werden bevorzugt Verbindungsfasern eingesetzt, um die Stabilität der Langfasern vor der Imprägnierung mit Imprägnat zu verbessern. Besonders bevorzugt werden **Verbindungsfasern** aus Glas oder einem thermoplastischem Polymer, insbesondere Verbindungsfasern aus E-Glas, Polyamid oder Polyester eingesetzt. Dem Fachmann ist der Einsatz von Verbindungsfasern zur Erhöhung der Stabilität von Langfaserverstärkungen aus beispielsweise WO90/12911 A1 bekannt.

### Komponente e)

Die Zusammensetzungen und die durch Mischen der Komponenten daraus erhältlichen Formmassen können in einer bevorzugten Ausführungsform zusätzlich zu den Komponenten a) bis d) weitere, von den Komponenten b) und c) unterschiedliche Additive als Komponente e) enthalten.

Weitere Additive e) sind bevorzugt wenigstens eine Komponente aus der Gruppe der Gammastrahlenstabilisatoren, der Hydrolysestabilisatoren, der Antistatika, der Emulgatoren, der Nukleierungsmittel, der Weichmacher, der Verarbeitungshilfsmittel, der Schlagzähmodifikatoren, der Elastomermodifikatoren, der Gleitmittel, der Entformungsmittel, der Farbstoffe oder der Pigmente.

Die genannten und weitere als Komponente e) geeignete Additive sind Stand der Technik und können vom Fachmann beispielsweise im Plastics Additives Handbook, 5th Edition, Hanser-Verlag, München, 2001, Seiten 80-84, 546-547, 688, 872-874, 938, 966 aufgefunden werden.

Bevorzugt wird Komponente e) in Mengen von 0,01 bis 20 Gew.-%, besonders bevorzugt 0,01 bis 10 Gew.-%, ganz besonders bevorzugt 0,01 bis 5 Gew.-%, jeweils bezogen auf die gesamte Zusammensetzung eingesetzt, wobei wenigstens eine der Komponenten a), b), c) oder d) soweit reduziert wird, dass die Summe aller Gewichtsprozente in der Zusammensetzung stets 100 ergibt.

Die als Komponente e) einzusetzenden Additive können alleine oder in Mischung bzw. in Form von Masterbatchen eingesetzt werden. Bevorzugt werden weitere Additive der Komponente e) im Rahmen des Verfahrensschritts (la) zu den Komponenten a), b) und c) hinzu dosiert.

Im Falle der thermoplastischen Formmassen, die als Zwischenprodukt nach dem Verfahrensschritt (la) anfallen, ist die Summe aller Gewichtsprozente stets 100 indem die Mengen der Komponenten a), b), c) und d), bevorzugt der Komponenten a) und d), in der Menge reduziert werden, wie an Additiven hinzu gefügt wird.

Im Falle der als Komponente e) bevorzugt einzusetzenden Schlagzähmodifikatoren oder Elastomermodifikatoren handelt es sich ganz allgemein um Copolymerisate, die bevorzugt aus mindestens zwei Monomeren aus der Gruppe Ethylen, Propylen, Butadien, Isobuten, Isopren, Chloropren, Vinylacetat, Styrol, Acrylnitril und Acrylsäureester oder Methacrylsäureester mit 1 bis 18 C-Atomen in der Alkoholkomponente aufgebaut sind. Die Copolymerisate können kompatibilisierende Gruppen, bevorzugt Maleinsäureanhydrid oder Epoxid enthalten.

Als Additiv e) bevorzugt einzusetzende Farbstoffe oder Pigmente sind anorganische Pigmente, besonders bevorzugt Titandioxid, Ultramarinblau, Eisenoxid, Zinksulfid oder Ruß, sowie organische Pigmente, besonders bevorzugt Phthalocyanine, Chinacridone, Perylene sowie Farbstoffe, besonders bevorzugt Nigrosin oder Anthrachinone, sowie andere Farbmittel.

Als Additiv e) bevorzugt einzusetzende Nukleierungsmittel sind Natrium- oder Calciumphenylphosphinat, Aluminiumoxid, Siliziumdioxid oder Talkum, besonders bevorzugt Talkum.

Ferner ist auch Gegenstand der vorliegenden Erfindung die **Verwendung einer Mischung** aus wenigstens einem Wärmestabilisator und wenigstens eines Esterwachses und/oder wenigstens eines Amidwachses zur Reduktion der Emissionen in Prozessen, in denen Langfaserverstärkungen mit einer thermoplastischen Schmelze imprägniert werden, die PA6 oder PA66 oder ein Co-Polyamid von PA6 oder PA66 enthält, wobei es sich bei den Emissionen um Kohlenwasserstoffe, Alkohole, Aldehyde, organische Säuren sowie Monomere der einzusetzenden Polyamide bzw. deren Zersetzungsprodukte handelt, vorzugsweise um Caprolactam im Falle des PA6 und entweder um Hexan-1,6-Diamin oder Adipinsäure im Falle des PA66, und die Charakterisierung der Rauchentwicklung durch Bestimmung der optischen Rauchdichte in Anlehnung an EN ISO 5659-2 erfolgt, wobei die zu untersuchende Zusammensetzung in Garnulatform einer solchen Bestrahlungsstärke ausgesetzt wird, indem auf 280 °C erhitzt wird.

Bevorzugt ist die Verwendung einer Mischung aus wenigstens einem Wärmestabilisator und wenigstens eines Esterwachses und/oder wenigstens eines Amidwachses zur Reduktion der Emissionen in Prozessen, in denen Langfaserverstärkungen die zu 90 Gew.-% aus Fasern mit einem Faserdurchmesser von 5 - 25 µm bestehen, wovon mindestens 80 % der Fasern eine Faserlänge von wenigstens 5 mm aufweisen und die bis zu 10 Gew.-% weitere Zusatzstoffe enthalten, mit einer thermoplastischen Schmelze, die zu mindestens 30 Gew.-% PA6 und/oder PA66 und/oder ein Co-Polyamid von PA6 oder PA66 enthält, zu einem Imprägnat imprägniert werden.

Bevorzugte Prozesse in denen Langfaserverstärkungen mit einer thermoplastischen Schmelze imprägniert werden sind das Austragen, Portionieren oder die Überführung eines Imprägnats in weitere Verarbeitungsprozesse.

Bevorzugt ist die Verwendung Kupfer(I)iodid in Kombination mit Kaliumbromid und/oder Kaliumiodid als Komponente b) und N,N'-Ethylenbisstearamid [CAS Nr. 110-30-5] als Komponente c).

Ganz besonders bevorzugt sind Zusammensetzungen enthaltend als Edukte
a) PA6 oder PA66 oder ein Co-Polyamid von PA6 oder PA66,
b) Kupfer(I)iodid in Kombination mit Kaliumbromid und/oder Kaliumiodid,
c) N,N'-Ethylenbisstearamid, und
d) eine Langfaserverstärkung, die zu 90 Gew.-% aus Fasern mit einem Faserdurchmesser von 5 bis 25 µm besteht, wovon mindestens 80 % eine Faserlänge von wenigstens 5 mm aufweisen und die bis zu 10 Gew.-% wenigstens eines Zusatzstoffes enthält.

Ganz besonders bevorzugt sind Zusammensetzungen enthaltend als Edukte
a) 15 bis 89,79 Gew.-% PA6 oder PA66 oder ein Co-Polyamid von PA6 oder PA66,
b) 0,01 bis 2 Gew.-% Kupfer(I)iodid in Kombination mit Kaliumbromid und/oder Kaliumiodid,
c) 0,05 bis 3 Gew.-% N,N'-Ethylenbisstearamid,
d) 10 bis 80 Gew.-% Langfaserverstärkung, die zu 90 Gew.-% aus Fasern mit einem Faserdurchmesser von 5 bis 25 µm besteht, wovon mindestens 80 % eine Faserlänge von wenigstens 5 mm aufweisen und die bis zu 10 Gew.-% wenigstens eines Zusatzstoffes enthält, und
e) 0,1 bis 30 Gew.-% wenigstens eines weiteren Additivs,
wobei die Summe aller Gewichtsprozente stets 100 Gew.-% ergibt.

Bevorzugt sind Zusammensetzungen enthaltend als Edukte
a) PA6,
b) wenigstens einen Wärmestabilisator,
c) wenigstens ein Esterwachs sowie
d) eine Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen und die bis zu 10 Gew.-% wenigstens eines Zusatzstoffes enthält.

Besonders bevorzugt sind Zusammensetzungen enthaltend als Edukte
a) 15 bis 89,79 Gew.-% PA6,
b) 0,01 bis 2 Gew.-% wenigstens eines Wärmestabilisators,
c) 0,05 bis 3 Gew.-% wenigstens eines Esterwachses sowie
d) 10 bis 80 Gew.-% einer Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen und die bis zu 10 Gew.-% wenigstens eines Zusatzstoffes enthält.

Bevorzugt sind Zusammensetzungen enthaltend als Edukte
a) PA6, insbesondere zu 15 bis 89,78 Gew.-%,
b) Kupfer(I)iodid und Kaliumbromid, insbesondere zu 0,01 bis 2 Gew.-%
c) wenigstens ein Esterwachs, insbesondere zu 0,05 bis 3 Gew.-%, sowie
d) eine Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen und die bis zu 10 Gew.-% wenigstens eines Zusatzstoffes enthält, insbesondere zu 10 bis 80 Gew.-%.

Bevorzugt sind Zusammensetzungen enthaltend als Edukte
a) PA6, insbesondere zu 15 bis 89,78 Gew.-%,
b) Kupfer(I)iodid und Kaliumbromid, insbesondere zu 0,01 bis 2 Gew.-%
c) wenigstens ein Amidwachs, insbesondere zu 0,05 bis 3 Gew.-%, sowie
d) eine Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen und die bis zu 10 Gew.-% wenigstens eines Zusatzstoffes enthält, insbesondere zu 10 bis 80 Gew.-%.

Bevorzugt sind Zusammensetzungen enthaltend als Edukte
a) PA6, insbesondere zu 15 bis 89,78 Gew.-%,
b) wenigstens Kupfer(I)iodid, insbesondere zu 0,01 bis 2 Gew.-%
c) N,N'-Ethylenbisstearamid, insbesondere zu 0,05 bis 3 Gew.-%, sowie
d) eine Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen und die bis zu 10 Gew.-% wenigstens eines Zusatzstoffes enthält, insbesondere zu 10 bis 80 Gew.-%.

Bevorzugt sind Zusammensetzungen enthaltend als Edukte
a) PA6, insbesondere zu 15 bis 89,78 Gew.-%,
b) Kupfer(I)iodid und Kaliumbromid, insbesondere zu 0,01 bis 2 Gew.-%
c) N,N'-Ethylenbisstearamid, insbesondere zu 0,05 bis 3 Gew.-%, sowie
d) eine Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen und die bis zu 10 Gew.-% wenigstens eines Zusatzstoffes enthält, insbesondere zu 10 bis 80 Gew.-%.

Bevorzugt sind Zusammensetzungen enthaltend als Edukte
a) PA6,
b) Kupfer(I)iodid und Kaliumbromid,
c) N,N'-Ethylenbisstearamid,
d) eine Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen und die bis zu 10 Gew.-% wenigstens eines Zusatzstoffes enthält, und
e) Ruß.

Bevorzugt sind Zusammensetzungen enthaltend als Edukte
a) PA6,
b) Kupfer(I)iodid und Kaliumbromid,
c) N,N'-Ethylenbisstearamid,
d) eine Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen und die bis zu 10 Gew.-% wenigstens eines Zusatzstoffes enthält,
e) Ruß, und
f) Talkum.

Das Verfahren des Spritzgusses, welches sich an das oben beschriebene erfindungsgemäße Verfahren in den Varianten (I), (II) und (III) beispielsweise anschließt, zeichnet sich dadurch aus, dass Zusammensetzungen, bevorzugt in Granulatform, in einem beheizten zylindrischen Hohlraum aufgeschmolzen (plastifiziert) und als Spritzmasse unter Druck in einen temperierten Hohlraum gespritzt werden. Nach dem Abkühlen (Erstarren) der Masse wird das Spritzgussteil entformt. Siehe: http://de.wikipedia.org/wiki/Spritzgie%C3%9Fen.

Man unterscheidet dabei die Schritte
1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze aus der erfindungsgemäß einzusetzenden Zusammensetzung gelöst, gekühlt und somit das zu fertigende Erzeugnis gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion (Siehe: http://de.wikipedia.org/wiki/Extrusion_(Verfahrenstechnik)) ein endlos geformter Kunststoffstrang, enthaltend eine erfindungsgemäße Zusammensetzung, in einem Extruder eingesetzt, wobei der Extruder eine Maschine zur Herstellung thermoplastischer Formstücke ist. Man unterscheidet
- Einschneckenextruder und Doppelschneckenextruder sowie die jeweiligen Untergruppen
- konventioneller Einschneckenextruder, förderwirksamer Einschneckenextruder,
- gegenläufige Doppelschneckenextruder und gleichläufige Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Nach dem Verfahren erhältlich sind Erzeugnisse, insbesondere Langfaser-verstärkte Erzeugnisse, durch Extrusion oder Spritzguss der in Form von Granulaten vorliegenden Zusammensetzungen enthaltend als Edukte
a) PA6 oder PA66 oder ein Co-Polyamid von PA6 oder PA66,
b) wenigstens einen Wärmestabilisator,
c) wenigstens ein Amidwachs und/oder wenigstens ein Esterwachs sowie
d) eine Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen, und die bis zu 10 Gew.-% wenigstens eines Zusatzstoffes enthält.

### Beispiele

Die in **Tabelle 1** genannten Komponenten wurden in einem Zweiwellenextruder des Typs ZSK 26 der Firma Coperion Werner & Pfleiderer (Stuttgart, Deutschland) bei einer Temperatur von ca. 280 °C gemischt, als Strang in ein Wasserbad ausgetragen, bis zur Granulierfähigkeit abgekühlt und granuliert. Das Granulat wurde bei 70°C im Vakuumtrockenschrank bis zur Gewichtskonstanz getrocknet. Erfindungsgemäß bedeutet Granulierfähigkeit, dass der Strang vom Granulatormesser durchtrennt werden kann ohne Fäden zu ziehen.

**Tabelle 1: Zusammensetzung der erfindungsgemäßen Beispiele und Beurteilung der Emission bei Extrusion mit Langglasfasern.**

| | Beispiel 1 | Beispiel 2 |
|---|---|---|
| Polyamid 6 A | 99,25 | |
| Polyamid 6 B | | 99,25 |
| N,N'-Ethylenbisstearamid | 0,25 | 0,25 |
| Kupfer(I)iodid | 0,06 | 0,06 |
| Kaliumbromid | 0,16 | 0,16 |
| Ruß | 0,25 | 0,25 |
| Talkum | 0,03 | 0,03 |
| Beurteilung der Emissionen bei Extrusion mit Langglasfasern [1 - 5] | 1 | 1 |

Die Zusammensetzungen der erfindungsgemäßen Beispiele 1 und 2 wurden in einem Zweiwellenextruder aufgeschmolzen und auf eine Temperatur von 280 °C erwärmt. Anschließend wurden Langglasfasern in die Schmelze eindosiert, wobei die Dosierung so eingestellt wurde, dass der Anteil der Langglasfasern einschließlich der Zusatzstoffe in Form von Bindemitteln, Schlichten oder bei 30 Gew.-% bezogen auf die gesamte Zusammensetzung einschließlich Langglasfasern lag. Die Thermoplast-Schmelze wurde durch eine Breitschlitzdüse ausgetragen und die Emissionen an der Düse wurden visuell mit einer Note auf einer Skala von 1 bis 5 bewertet. Dabei steht eine 1 für nur sehr geringe beobachtete Emissionen in Form rauchender Zersetzungsprodukte des Polyamids und eine 5 für sehr starke und störende Emissionen. Bei beiden erfindungsgemäßen Beispielen wurden nur sehr geringe Emissionen beobachtet.

### Verwendete Materialien:

Polyamid 6 A, linear mit einer Viskositätszahl bestimmt in einer 0,5 gew.-%igen Lösung in 96 gew.-%iger Schwefelsäure bei 25 °C gemäß ISO 307 von 145 ml/g

Polyamid 6 B, linear mit einer Viskositätszahl bestimmt in einer 0,5 gew.-%igen Lösung in 96 gew.-%iger Schwefelsäure bei 25 °C gemäß ISO 307 von 107 ml/g N,N'-Ethylenbisstearamid, Acrawax® C von Lonza Cologne GmbH, CAS Nr. 110-30-5

| | |
|---|---|
| Kupfer(I)iodid, d99 < 70 µm, | CAS Nr. 7681-65-4 |
| Kaliumbromid, d99 < 70 µm, | CAS Nr. 7758-02-3 |
| Talkum | CAS Nr. 14807-96-6 |
| Ruß | CAS Nr. 1333-86-4 |

Langglasfaser mit einem nominellen Durchmesser von 16 µm, einem Schlichtegehalt von ca. 0,3 %, einer linearen Dichte von 2.400 text und einer Länge von ca. 8.300 m, z.B. StarRov® LFT Plus PR 440 2400 871 von Johns Manville

## Patentansprüche

1. Verfahren zur Verhinderung oder zur Reduktion von Emissionen während der Verarbeitung Langfaser-verstärkter PA6- oder PA66-basierter oder auf Copolyamiden von PA6 oder PA66 basierenden Formmassen, **dadurch gekennzeichnet, dass** wenigstens ein Wärmestabilisator und wenigstens ein Amidwachs und/oder wenigstens ein Esterwachs vermischt wird und die Langfaserverstärkung(en) zu mindestens 90 Gew.-% aus Fasern mit einem Faserdurchmesser im Bereich von 5 bis 25 µm bestehen, wovon mindestens 80 % der Fasern eine Länge von wenigstens 5 mm aufweisen, und die Langfaserverstärkung bis zu 10 Gew.-% wenigstens eines Zusatzstoffes enthält, wobei es sich bei den Emissionen um Kohlenwasserstoffe, Alkohole, Aldehyde, organische Säuren sowie Monomere der als Edukte einzusetzenden Polyamide bzw. deren Zersetzungsprodukte handelt und. als Wärmestabilisator wenigstens eine Komponente aus der Gruppe der Kupferverbindungen, der sterisch gehinderten Phenole, der Phosphite, der Phosphate, der Hydrochinone, der aromatischen sekundären Amine, der substituierten Resorcine, der Salicylate, der Benzotriazole oder der Benzophenone, sowie verschieden substituierte Vertreter dieser Komponenten und/oder deren Mischungen eingesetzt wird.

2. Verfahren gemäß Anspruch 1, **dadurch gekennzeichnet,**
**dass** die Zusatzstoffe auszuwählen sind aus der Gruppe Bindemittel, Schlichte und Verbindungsfasern.

3. Verfahren gemäß einem der Ansprüche 1 bis 2, **dadurch gekennzeichnet, dass** als Amidwachs wenigstens eine Verbindung eingesetzt wird, die mittels einer Kondensationsreaktion von langkettigen Carbonsäuren mit mono- oder polyfunktionalen Aminen hergestellt wird.

4. Verfahren gemäß Anspruch 3, **dadurch gekennzeichnet, dass** für die Synthese der Amidwachse verzweigte oder lineare langkettige aliphatische Carbonsäuren mit mehr als 11 Kohlenstoffatomen eingesetzt werden, bevorzugt liegt die Kettenlänge der aliphatischen Carbonsäuren im Bereich von 12 bis 36 Kohlenstoffatomen.

5. Verfahren gemäß Anspruch 4, **dadurch gekennzeichnet, dass** wenigstens eine Carbonsäure der Gruppe Laurinsäure, Isotridecansäure, Myristinsäure, Palmitinsäure, Margarinsäure, Stearinsäure, Isostearinsäure, Arachinsäure, Behensäure, Lignocerinsäure, Cerotinsäure, Montansäure, Melissinsäure, Myristoleinsäure, Palmitoleinsäure, Petroselinsäure, Ölsäure, Elaidinsäure, Vaccensäure, Gadoleinsäure, Icosensäure, Cetoleinsäure, Erucasäure, Nervonsäure, Linolsäure, Linolensäure, Calendulasäure, Elaeostearinsäure, Punicinsäure, Arachidonsäure, Timmodonsäure, Clupanodonsäure und Cervonsäure sowie deren technische Mischungen eingesetzt wird, bevorzugt wenigstens eine Carbonsäure der Gruppe Margarinsäure, Stearinsäure, Arachinsäure und Behensäure, insbesondere Stearinsäure.

6. Verfahren gemäß Anspruch 5, **dadurch gekennzeichnet, dass** als mono- oder polyfunktionale Amine Alkylamine mit einer oder mehreren Amingruppen eingesetzt werden, wobei die Amingruppen primärer oder sekundärer Natur sein können und die Alkylkomponente gesättigt oder ungesättigt ist.

7. Verfahren gemäß Anspruch 6, **dadurch gekennzeichnet, dass** Alkylamine mit endständigen primären Amingruppen eingesetzt werden, bevorzugt lineare gesättigte Alkylamine mit zwei endständigen primären Amingruppen.

8. Verfahren gemäß Anspruch 3, **dadurch gekennzeichnet dass** ein Amidwachs auf Basis von Ethylendiamin eingesetzt wird, vorzugsweise N,N'-Ethylenbisstearamid .

9. Verfahren gemäß einem der Ansprüche 1 bis 3, **dadurch gekennzeichnet, dass** als Esterwachs wenigstens eine Verbindung eingesetzt wird, die mittels einer Kondensationsreaktion mindestens einer langkettigen monofunktionellen, aliphatischen Carbonsäure mit einem Alkohol hergestellt wird.

10. Verfahren gemäß Anspruch 9, **dadurch gekennzeichnet, dass** als Esterwachse Ester der der Gruppe Laurinsäure, Isotridecansäure, Myristinsäure, Palmitinsäure, Margarinsäure, Stearinsäure, isostearinsäure, Arachinsäure, Behensäure, Lignocerinsäure, Cerotinsäure, Montansäure, Melissinsäure, Myristoleinsäure, Palmitoleinsäure, Petroselinsäure, Ölsäure, Elaidinsäure, Vaccensäure, Gadoleinsäure, Icosensäure, Cetoleinsäure, Erucasäure, Nervonsäure, Linolsäure, Linolensäure, Calendulasäure, Elaeostearinsäure, Punicinsäure, Arachidonsäure, Timmodonsäure, Clupanodonsäure und Cervonsäure sowie deren technische Mischungen eingesetzt werden.

11. Verfahren gemäß Anspruch 9, **dadurch gekennzeichnet, dass** für die Alkoholkomponente des Esterwachses ungesättigte oder gesättigte Alkylverbindungen mit mindestens einer Hydroxylgruppe eingesetzt werden, wobei die Hydroxylgruppen primär, sekundär oder tertiär sind.

12. Verfahren gemäß Anspruch 11, **dadurch gekennzeichnet, dass** gesättigte Alkyl-verbindungen mit 1 bis 8 primären oder sekundären Hydroxylgruppen eingesetzt werden, vorzugsweise lineare gesättigte Alkylverbindungen mit 1 bis 4 primären oder sekundären Hydroxylgruppen.

13. Verfahren gemäß Anspruch 12, **dadurch gekennzeichnet, dass** wenigstens ein Alkohol der Reihe Erythrit, Pentaerythrit, Glyzerin, Ethylenglykol sowie deren technische Mischungen eingesetzt wird.

14. Verfahren gemäß einem der Ansprüche 1 bis 13, **dadurch gekennzeichnet, dass** die Langfaserverstärkung wenigstens eine Langfaser aus der Gruppe der Glasfasern, der Kohlenstofffasern, der Naturfasern, der Kunststofffasern, der Stahlfasern und der Mineralfasern enthält.

15. Verfahren gemäß Anspruch 14, **dadurch gekennzeichnet, dass** die Langfaserverstärkung in Form eindimensionaler, zweidimensionaler oder dreidimensionaler Struktur vorliegt, wobei eine eindimensionale Struktur für Langfasern und Garne steht, zweidimensionale Langfaserverstärkungen Vliese, Gelege, Gewebe, Geflechte und Gestricke sind und dreidimensionale Langfaserverstärkungen Vliese, Gelege, Gewebe, Geflechte und Gestricke sind, die Langfasern oder Garne enthalten, bei denen mindestens ein Teil der Langfasern und Garne eine Krümmung aufweisen.

## Claims

1. Method of preventing or reducing emissions during the processing of long fibre reinforced moulding materials based on PA6 or PA66 or on copolyamides of PA6 or PA66, **characterized in that** at least one thermal stabilizer and at least one amide wax and/or at least one ester wax is mixed and the long fibre reinforcement(s) consist(s) to an extent of at least 90 wt% of fibres having a fibre diameter in the range from 5 to 25 µm, of which not less than 80% of the fibres have a length of at least 5 mm, and the long fibre reinforcement contains up to 10 wt% of at least one added-substance material, wherein the emissions concern hydrocarbons, alcohols, aldehydes, organic acids and also monomers of the polyamides to be used as ingredients, and/or decomposition products thereof, and the thermal stabilizer utilizes at least one component from the group of copper compounds, of sterically hindered phenols, of phosphites, of phosphates, of hydroquinones, of aromatic secondary amines, of substituted resorcinols, of salicylates, of benzotriazoles or of benzophenones, and also variously substituted representatives of these components and/or mixtures thereof.

2. Method according to Claim 1, **characterized in that** the added-substance materials shall be selected from the group consisting of binders, size and tying fibres.

3. Method according to one of Claims 1 to 2, **characterized in that** the amide wax employed is at least one compound prepared via a condensation reaction of long-chain carboxylic acids with mono- or polyfunctional amines.

4. Method according to Claim 3, **characterized in that** the amide waxes are synthesized employing branched or linear long chain aliphatic carboxylic acids having more than 11 carbon atoms, preferably the chain length of the aliphatic carboxylic acids being in the range from 12 to 36 carbon atoms.

5. Method according to Claim 4, **characterized in that** at least one carboxylic acid from the group lauric acid, isotridecanoic acid, myristic acid, palmitic acid, margaric acid, stearic acid, isostearic acid, arachidic acid, behenic acid, lignoceric acid, cerotic acid, montanoic acid, melissic acid, myristoleic acid, palmitoleic acid, petroselic acid, oleic acid, elaidic acid, vaccenic acid, gadoleic acid, icosenoic acid, cetoleic acid, erucic acid, nervonic acid, linoleic acid, linolenic acid, calendula acid, elaeostearic acid, punicic acid, arachidonic acid, timnodonic acid, clupanodonic acid and cervonic acid and also their technical grade mixtures is used, preferably at least one carboxylic acid from the group margaric acid, stearic acid, arachidic acid and behenic acid, especially stearic acid.

6. Method according to Claim 5, **characterized in that** by way of mono- or polyfunctional amines there are used alkylamines having one or more amino groups wherein the amino groups may be primary or secondary in nature and the alkyl component is saturated or unsaturated.

7. Method according to Claim 6, **characterized in that** alkylamines having terminal primary amino groups are used, preferably linear saturated alkylamines having two terminal primary amino groups.

8. Method according to Claim 3, **characterized in that** an amide wax based on ethylenediamine is used, preferably N,N'-ethylenebisstearamide.

9. Method according to any of Claims 1 to 3, **characterized in that** at least one compound is employed as ester wax that is prepared via a condensation reaction of at least one long chain monofunctional aliphatic carboxylic acid with an alcohol.

10. Method according to Claim 9, **characterized in that** ester waxes used are esters of the of the group lauric acid, isotridecanoic acid, myristic acid, palmitic acid, margaric acid, stearic acid, isostearic acid, arachidic acid, behenic acid, lignoceric acid, cerotic acid, montanoic acid, melissic acid, myristoleic acid, palmitoleic acid, petroselic acid, oleic acid, elaidic acid, vaccenic acid, gadoleic acid, icosenoic acid, cetoleic acid, erucic acid, nervonic acid, linoleic acid, linolenic acid, calendular acid, elaeostearic acid, punicic acid, arachidonic acid, timnodonic acid, clupanodonic acid and cervonic acid and also their technical grade mixtures.

11. Method according to Claim 9, **characterized in that** the alcohol component of the ester wax utilizes saturated or unsaturated alkyl compounds having one or more than one hydroxyl group wherein the hydroxyl groups are primary, secondary or tertiary.

12. Method according to Claim 11, **characterized in that** saturated alkyl compounds having 1 to 8 primary or secondary hydroxyl groups are employed, preferably linear saturated alkyl compounds having 1 to 4 primary or secondary hydroxyl groups.

13. Method according to Claim 12, **characterized in that** at least one alcohol from the series erythritol, pentaerythritol, glycerol, ethylene glycol and also technical grade mixtures thereof is employed.

14. Method according to any of Claims 1 to 13, **characterized in that** the long fibre reinforcement comprises at least one long fibre from the group of glass fibres, carbon fibres, natural fibres, polymeric fibres, steel fibres and mineral fibres.

15. Method according to Claim 14, **characterized in that** the long fibre reinforcement takes the form of a one-dimensional, two-dimensional or three-dimensional structure, wherein a one-dimensional structure stands for long fibres and yarns, two-dimensional long fibre reinforcements are nonwovens, non-crimp fabrics, wovens, braids and weft-knitted fabrics produced by weft knitting with independently movable needles, and three-dimensional long fibre reinforcements are nonwovens, non-crimp fabrics, wovens, braids and weft-knitted fabrics produced by weft knitting with independently movable needles that contain long fibres or yarns where some or all of the long fibres and yarns exhibit an undulation.

## Revendications

1. Procédé d'inhibition ou de réduction d'émissions pendant l'usinage de matériaux de moulage à base de PA6 ou de PA66 ou à base de copolyamides de PA6 ou de PA66 renforcés par des fibres longues, **caractérisé en ce qu'**au moins un stabilisateur thermique et au moins une cire d'amide et/ou au moins une cire d'ester sont mélangés et le ou les renforcements par des fibres longues sont constitués par au moins 90 % en poids de fibres ayant un diamètre de fibre dans la plage allant de 5 à 25 µm, parmi lesquelles au moins 80 % des fibres présentent une longueur d'au moins 5 mm, et le renforcement par des fibres longues contient jusqu'à 10 % en poids d'au moins un additif, les émissions consistant en des hydrocarbures, des alcools, des aldéhydes, des acides organiques, ainsi que des monomères des polyamides utilisés en tant que réactifs ou leurs produits de décomposition, et, en tant que stabilisateur thermique, au moins un composant du groupe constitué par les composés de cuivre, les phénols à encombrement stérique, les phosphites, les phosphates, les hydroquinones, les amines secondaires aromatiques, les résorcines substituées, les salicylates, les benzotriazoles ou les benzophénones, ainsi que les représentants différemment substitués de ces composants et/ou leurs mélanges, étant utilisé.

2. Procédé selon la revendication 1, **caractérisé en ce que** les additifs sont choisis dans le groupe constitué par les liants, les agents d'encollage et les fibres de liaison.

3. Procédé selon l'une quelconque des revendications 1 à 2, **caractérisé en ce qu'**au moins un composé qui est fabriqué par une réaction de condensation d'acides carboxyliques à chaîne longue avec des amines mono- ou polyfonctionnelles est utilisé en tant que cire d'amide.

4. Procédé selon la revendication 3, **caractérisé en ce que** des acides carboxyliques aliphatiques à chaîne longue ramifiés ou linéaires contenant plus de 11 atomes de carbone sont utilisés pour la synthèse des cires d'amide, la longueur de chaîne des acides carboxyliques aliphatiques se situant de préférence dans la plage allant de 12 à 36 atomes de carbone.

5. Procédé selon la revendication 4, **caractérisé en ce qu'**au moins un acide carboxylique du groupe constitué par l'acide laurique, l'acide isotridécanoïque, l'acide myristique, l'acide palmitique, l'acide margarique, l'acide stéarique, l'acide isostéarique, l'acide arachidique, l'acide béhénique, l'acide lignocérique, l'acide cérotique,, l'acide montanique, l'acide mélissique, l'acide myristoléique, l'acide palmitoléique, l'acide pétrosélinique, l'acide oléique, l'acide élaïdique, l'acide vaccénique, l'acide gadoléique, l'acide icosénique, l'acide cétoléique, l'acide érucique, l'acide nervonique, l'acide linoléique, l'acide linolénique, l'acide calendulique, l'acide éléostéarique, l'acide punicique, l'acide arachidonique, l'acide timnodonique, l'acide clupanodonique et l'acide cervonique, ainsi que leurs mélanges techniques est utilisé, de préférence au moins un acide carboxylique du groupe constitué par l'acide margarique, l'acide stéarique, l'acide arachidique et l'acide béhénique, notamment l'acide stéarique.

6. Procédé selon la revendication 5, **caractérisé en ce que** des alkylamines contenant un ou plusieurs groupes amino sont utilisées en tant qu'amines mono- ou polyfonctionnelles, les groupes amino pouvant être de nature primaire ou secondaire et le composant alkyle étant saturé ou insaturé.

7. Procédé selon la revendication 6, **caractérisé en ce que** des alkylamines contenant des groupes amino primaires terminaux sont utilisées, de préférence des alkylamines saturées linéaires contenant deux groupes amino primaires terminaux.

8. Procédé selon la revendication 3, **caractérisé en ce qu'**une cire d'amide à base d'éthylène-diamine est utilisée, de préférence le N,N'-éthylène-bis-stéaramide.

9. Procédé selon l'une quelconque des revendications 1 à 3, **caractérisé en ce qu'**au moins un composé qui est fabriqué par une réaction de condensation d'au moins un acide carboxylique aliphatique monofonctionnel à chaîne longue avec un alcool est utilisé en tant que cire d'ester.

10. Procédé selon la revendication 9, **caractérisé en ce que** des esters des du groupe constitué par l'acide laurique, l'acide isotridécanoïque, l'acide myristique, l'acide palmitique, l'acide margarique, l'acide stéarique, l'acide isostéarique, l'acide arachidique, l'acide béhénique, l'acide lignocérique, l'acide cérotique, l'acide montanique, l'acide mélissique, l'acide myristoléique, l'acide palmitoléique, l'acide pétrosélinique, l'acide oléique, l'acide élaïdique, l'acide vaccénique, l'acide gadoléique, l'acide icosénique, l'acide cétoléique, l'acide érucique, l'acide nervonique, l'acide linoléique, l'acide linolénique, l'acide calendulique, l'acide éléostéarique, l'acide punicique, l'acide arachidonique, l'acide timnodonique, l'acide clupanodonique et l'acide cervonique, ainsi que leurs mélanges techniques, sont utilisés en tant que cires d'ester.

11. Procédé selon la revendication 9, **caractérisé en ce que** des composés alkyliques insaturés ou saturés contenant au moins un groupe hydroxyle sont utilisés pour le composant alcool de la cire d'ester, les groupes hydroxyle étant primaires, secondaires ou tertiaires.

12. Procédé selon la revendication 11, **caractérisé en ce que** des composés alkyliques saturés contenant 1 à 8 groupes hydroxyle primaires ou secondaires sont utilisés, de préférence des composés alkyliques saturés linéaires contenant 1 à 4 groupes hydroxyle primaires ou secondaires.

13. Procédé selon la revendication 12, **caractérisé en ce qu'**au moins un alcool de la série constituée par l'érythritol, le pentaérythritol, la glycérine, l'éthylène glycol et leurs mélanges techniques est utilisé.

14. Procédé selon l'une quelconque des revendications 1 à 13, **caractérisé en ce que** le renforcement par des fibres longues contient au moins une fibre longue du groupe constitué par les fibres de verre, les fibres de carbone, les fibres naturelles, les fibres de matière plastique, les fibres d'acier et les fibres minérales.

15. Procédé selon la revendication 14, **caractérisé en ce que** le renforcement par des fibres longues se présente sous la forme d'une structure monodimensionnelle, bidimensionnelle ou tridimensionnelle, une structure monodimensionnelle désignant des fibres longues et des fils, des renforcements par des fibres longues bidimensionnels étant des non-tissés, des nappes, des tissus, des treillis et des tricots, et des renforcements par des fibres longues tridimensionnels étant des non-tissés, des nappes, des tissus, des treillis et des tricots qui contiennent des fibres longues ou des fils, dans lesquels au moins une partie des fibres longues et des fils présentent une courbure.
